(19) Europäisches Patentamt

European Patent Office

Office européen des brevets

(11) Publication number: **0 006 754**
**B1**

(12) **EUROPEAN PATENT SPECIFICATION**

(45) Date of publication of patent specification: 26.05.82

(21) Application number: 79301235.2

(22) Date of filing: 26.06.79

(51) Int. Cl.³: **G 01 L 3/14, G 01 L 5/00, G 11 B 23/04, G 11 B 15/43**

(54) Testing apparatus for cassette type tape recorders.

(30) Priority: 26.06.78 AU 4851/78
20.09.78 AU 40016/78

(43) Date of publication of application:
09.01.80 Bulletin 80/1

(45) Publication of the grant of the patent:
26.05.82 Bulletin 82/21

(84) Designated Contracting States:
AT BE CH DE FR GB IT LU NL SE

(56) References cited:
DE - A - 2 336 501
FR - A - 2 389 196
US - A - 3 677 496
US - A - 3 771 358
US - A - 3 942 367

(73) Proprietor: Stanton, Peter Robert
76 Showground Road, Castle Hill
Sydney, New South Wales 2154 (AU)

(72) Inventor: Stanton, Peter Robert
76 Showground Road, Castle Hill
Sydney, New South Wales 2154 (AU)

(74) Representative: Gallafent, Richard John et al,
GALLAFENT & CO. 8 Staple Inn
London WCIV 7QH. (GB)

Courier Press, Leamington Spa, England.

Testing apparatus for cassette type tape recorders

The present invention relates to apparatus for testing cassette type tape recording and/or playback machines which will be referred to hereinafter for convenience as cassette type tape recorders. The term "cassette type tape recorders" is used in this specification to refer to a machine intended for use with any form or size of cassette which comprises a cassette shell containing a pair of spools with recording tape wound thereon and extending therebetween over suitable guides so that in use one spool is functioning as a supply spool and the other as a take-up spool.

For sound recordings, various standard sizes have been adopted for example one size for domestic musical recordings and other sizes for office dictating machines. The field of the invention also extends to apparatus for testing machines which operate on larger size units which may also be known as "cartridges".

More particularly the present invention is concerned with apparatus for testing cassette type machines, the apparatus comprising a cassette shell adapted to be mounted on a machine under test, first and second spools rotatably mounted within the cassette shell and adapted to be engaged and rotated respectively by forward and rewind spindles of the machine and means for monitoring torque applied by either of the spindles to the respective one of the spools.

U.S.—A—3771358 provides a torque measuring apparatus for use on a cassette tape recorder but the various embodiments disclosed are very complex and would be expensive to produce and assemble. The various embodiments are characterised by recording tape extending over the conventional guide rollers at the forward corners of the cassette shell, the tape thereby being positioned so as to be driven by a pinch roller and drive capstan unit of the machine when in the normal play mode. The take-up spool of the test apparatus comprises an inner ring arranged to be driven by the spindle of the machine and an outer ring rotatably displaceable against the biasing of a helical torsion spring with a pointer from the inner ring overlapping the outer ring. The amount of displacement of the outer ring relative to the inner ring in the normal play mode indicates the applied torque.

In fast forward and rewind modes, measurement of applied torque is determined by virtue of the displacement of the outer ring relative to the inner ring, a displacement tending to occur as a result of drag of the tape in the cassette.

DE—A—1919371 discloses another form of test apparatus for cassette type tape recorders. In this case spools are rotatably mounted within a cassette shell for engagement with the respective take-up and rewind spindles of the machine. The periphery of each spool is grooved with a wire wound around each spool and applying a frictional drag on the spool by virtue of one end of the wire being attached to a fixed mounting and the other to a helical extension spring. This type of test apparatus would require very careful and accurate adjustment in order to function effectively and would therefore be expensive to assemble and even then not necessarily reliable in use. Torque is not measured in this test apparatus but is assessed simply by determining whether or not a spool is rotating, rotation simply indicating that the torque exceeds a certain value.

U.S.—A—3677496 likewise discloses a testing apparatus substantially of the type noted above, but in which torque is not measured as such; rather rotation of a spool indicates if a preset torque value is exceeded.

DE—A—2336501 discloses torque measuring apparatus in which a tape wound on two spools is moved and its tension measured by means of suitable spring biased members. Specifically, the apparatus there disclosed includes an indicator element spring biased by biasing means to a rest position, and a flexible tape bearing on means connected to the indicator element, the tape being connected to each of the two driven members, the displacement of the indicator element being observable and proportional to tape tension.

According to the present invention, apparatus of the type noted and in which there is an indicator element being spring biased by biasing means to a rest position and connected by a flexible tape to each of the spools, the displacement of the indicator element being observable and being proportional to the torque applied to one of the spools, is characterised in that the tape is connected directly to the indicator element such that rotation of the spools in either direction causes the indicator element to move from a central position towards the spool which is being driven by an amount proportional to the torque applied to the driven spool.

Such apparatus can be simply, easily and cheaply constructed but nevertheless is a reliable device particularly suitable for use by a non-expert to determine whether a particular machine is in need of servicing or not.

Thus the present invention may be implemented in a simple and effective manner and relies upon the principle of monitoring the torque applied by the rewind or take-up spindles of the machine when in a stalled condition. Thus there is no interference of the measurement as the performance of the capstan and pinch roller plays no part. Furthermore the device according to the invention can permit the user to test rapidly and effectively whether the applied torque in the normal play, fast forward and rewind modes is within a safe working range.

In a preferred embodiment of the invention, the indicator means is in the form of an elongated pointer, one end of which is visible through the clear window in a central region of the cassette located between the driven members, the opposite end of the pointer being pivotally mounted in the cassette shell.

In accordance with a further inventive feature, the indicator element and the spring biasing is provided by a T-shaped moulding of plastics material, the arms of the T extending laterally on opposite sides of the pivotal mounting of the pointer and the tips of the arms being retained against motion at right angles to the axis of each arm. In this embodiment cheap manufacture of components can be provided yet particularly when the tips of the arms are constrained between a pair of projections on the cassette shell, reliable and accurate assembly without special tools or skilled labour can be ensured. In operation, the arms are simply flexed so that a shallow S-shape occurs on displacement of the indicator means in either direction.

A further inventive feature which can be provided is for the pointer of the indicator means to be formed from two elements which are snap fitted together, sandwiching the tape between the components in the snap fitting operation.

Embodiments of the invention can therefore be constructed very cheaply without skilled labour yet the home user can readily determine from a calibrated scale whether the deflection of the pointer corresponding to the applied torque in any particular mode is within a safe working range. Thus, the user can ensure that the cassette machine is serviced before risk of tape breakage and/or jamming arises.

By contrast the testing apparatus of US—A—3771358 or DE—A—2336501 would be more expensive and complicated to manufacture and furthermore the monitoring function is based on a different principle, relying on a dynamic situation in which a tape is wound around the spool. The apparatus of the present invention has a simple structure and in contrast relies upon the appreciation that useful results can be obtained by monitoring the applied torque with the spindle in question stationary.

In contrast to DE—A—1919371, and US—A—3677496 the present invention permits an indication of the value of applied torque to be derived whereas these specifications disclose a system which would be complicated and expensive to manufacture and would require careful adjustments and in any event only give a "yes-no" indication.

A preferred embodiment of the invention will now be described, for illustrative purposes only with the reference to the accompanying drawings of which:

Figure 1 is a plan view of a test cassette apparatus embodying the invention;

Figure 2 is a cross sectional view taken along the line III—III of Figure 3; and

Figure 3 is a plan view of the test apparatus with the upper portion of the cassette shell removed to show the interior construction.

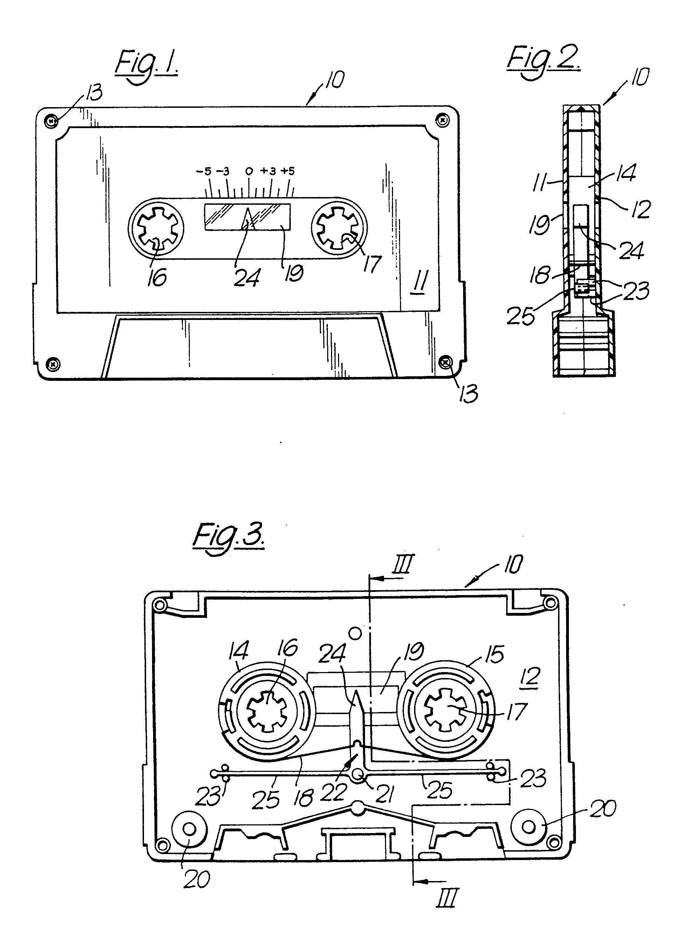

The test apparatus comprises a cassette shell 10 formed from upper and lower half shells 11 and 12 conveniently fixed together on assembly by screws 13 at each corner of the apparatus. First and second spools 14 and 15 are rotatably mounted within the cassette shell and have respective toothed apertures 16 and 17 for accommodating the conventional rewind and take-up spindles of the machine to be tested. As shown in Figure 3, the spools are interconnected by a piece of flexible tape 18 which in the rest position extends about 1/6th the way around each spool, the ends of the tape being fixed to the spool by conventional tape retaining clips on the spools but not shown in the drawing. The tape is conveniently conventional leader tape.

From Figures 1 and 3 it will be apparent that each half shell has a central window 19 which in a conventional cassette is utilised to view the tape. Thus the components described so far all comprise conventional components for regular cassettes and these components are mass produced in large volume at very low price, the only distinction being in assembly wherein a short length of leader tape only is used to interconnect directly the spools whereas in a regular cassette the magnetic tape passes around guide rollers 20 at the front corners of the cassette and through an open front portion for contacting the playback head and the pinch roller-capstan unit of the machine.

The lower half shell 12 is however modified compared with a standard shell is providing a pivot pin 21 for an integrally formed T-shaped member 22, and two pairs of location pins 23 for retaining the end portions of the arms of the T member 22. These pins 21 and 23 can simply be integrally moulded plastic pins formed with the moulding of the lower shell 12.

The T-shaped member 22 provides an integral indicator means with spring biasing. By comparing Figures 2 and 3 it will be apparent that the upright portion of T member 22, which forms a pointer 24, is of approximately square cross section shape with a tapered end portion whereas arms 25 of the T member are relatively thin flat arms terminating in rib-like ends which function to prevent the end portion of an arm sliding generally in its longitudinal direction out of location with its associated location pins 23.

The pointer 24 is formed from two portions which as shown in Figure 3, are moulded so as to be snap fitted together, the tape 18 being sandwiched between the portions of the pointer.

It will be apparent from Figure 3 that the test apparatus can be readily assembled largely from conventional components but only including a simple and unique indicator-biasing means which can be readily assembled by unskilled labour simply by engaging the T member 22 with the respective pins and snap fitting the tip portion of the pointer onto the base portion to interconnect with the tape 18.

As shown in Figure 1, a scale is applied to the exterior of the shell 10 so as to facilitate reading off the applied torque when the test apparatus is used, the scale reading being compared with a printed table indicating the range of readings considered normal when monitoring a particular function.

For the purpose of monitoring the applied torque in normal play or record mode, the test cassette is placed over the spindles of the machine and manually placed in the appropriate mode, thereby causing the take-up spindle to apply torque to and turn the spool 15 which rotates in a anticlockwise direction thereby pulling the tape 18 and the pointer to the right. The pointer pivots about pivot pin 21 thereby causing the arms 25 to flex into a shallow S-shape against their inherent resilience until the applied torque equals the tension in the resiliently deformed arms 25, at which point the spool 15 and the drive spindle stall and the clutch in the machine slips. The displacement of the pointer in this condition is noted and compared against the published table to determine whether the applied torque is within a normal safe operating range.

It will be noted that although in this mode of normal play, the pinch roller and capstan of the cassette machine will be operating, they play no part in the test operation in accordance with the invention and in the event there is some defect with the capstan or pinch roller such as a tendency of the pinch roller to slip, this will not cause any false reading in the spindle torque measurement.

Similarly the applied torque of the take-up spindle is monitored simply by manually placing the cassette machine into the fast forward mode and a different deviation in the pointer in general will be found.

To monitor rewind, the appropriate button on the tape recorder is manually actuated and in this case the take-up spindle is driven to rotate the left hand spool 14 in a clockwise direction thereby displacing the pointer 24 to the left in an identical manner against the spring biasing of the arms 25.

It will be observed that the symmetrical design of the test cassette is such that it may be used with either of half shells 11 or 12 uppermost.

## Claims

1. Apparatus for testing cassette type tape machines, the apparatus comprising a cassette shell adapted to be mounted on a machine under test, first and second spools rotatably mounted within the cassette shell and adapted to be engaged and rotated respectively by forward and rewind spindles of the machine and means for monitoring torque applied by either of the spindles to the respective one of the spools, an indicator element being spring biased by biasing means to a rest position and connected by a flexible tape to each of the spools, the displacement of the indicator element being observable and being proportional to the torque applied to one of the spools, characterised in that the tape (18) is connected directly to the indicator element (22) such that rotation of the spools (14, 15) in either direction causes the indicator element to move from a central position towards the spool which is being driven by an amount proportional to the torque applied to the driven spool.

2. Apparatus according to claim 1 wherein the indicator element comprises an elongated pointer (24) having a free end which is visible through a clear window (19) in the cassette shell (10) in the region between the spools (14 and 15) and having an opposite end mounted pivotally (21) in the cassette shell.

3. Apparatus according to claim 2 and further characterised by a T-shaped moulding (22) of plastics material providing the elongated pointer and the biasing means, the arms of the T-shaped member (25) extending laterally to opposite sides of the pivotal mounting (21) and the tips of the arms being retained by retaining members (23) against motion at right angles to the axis of each arm (25).

4. Apparatus according to claim 3 wherein each arm (25) extends more than half way from the pivotal mounting (21) towards the respective end of the cassette shell, the retaining members (23) permitting limited motion of the arm in a direction along its axis.

5. Apparatus according to any one of claims 2 to 4 and further characterised by the elongated pointer being formed from two portions snap fitted together, the flexible tape being sandwiched between the two portions when they are snap fitted together.

## Revendications

1. Dispositif d'essai de machine à bande du type logé dans une cassette, le dispositif comportant un boîtier de cassette destiné à être monté sur une machine soumise aux essais, deux bobines montées afin qu'elles puissent tourner dans la boîtier et destinées à coopérer avec les axes de marche avant et de réenroulement de la machine afin que ceux-ci les fassent tourner, et un dispositif de contrôle du couple appliqué par l'un ou l'autre des axes à la bobine correspondante, un élément indicateur repoussé élastiquement par un dispositif de rappel vers une position de repos et relié par une bande souple à chacune des bobines, le déplacement de l'élément indicateur pouvant être observé et étant proportionnel au couple appliqué à l'une des bobines, caractérisé en ce que la bande (18) est directement reliée à l'élément indicateur (22) afin que la rotation des bobines (14, 15) dans un sens ou dans l'autre provoque le déplacement de l'élément indicateur d'une position centrale vers la bobine entraînée, avec une amplitude proportionnelle au couple appliqué à la bobine entraînée.

2. Dispositif selon la revendication 1, caractérisé en ce que l'élément indicateur comprend une aiguille allongée (24) ayant une extrémité libre visible à travers une fenêtre transparente (19) formée dans le boîtier (10) de la cassette, dans la région comprise entre les bobines (14 et 15), et dont l'autre extrémité est articulée (21) dans le boîtier de la cassette.

3. Dispositif selon la revendication 2, caractérisé en ce qu'un organe moulé (22) de matière plastique, ayant une forme en T, constitue l'aiguille et le dispositif de rappel, les bras de cet organe en T (25) dépassant latéralement de part et d'autre de l'articulation (21), les bouts des bras étant retenus par des éléments (23) afin qu'ils ne puissent pas se déplacer en direction perpendiculaire à l'axe de chaque bras (25).

4. Dispositif selon la revendication 3, caractérisé en ce que chaque bras (25) est disposé sur plus de la moitié de la distance comprise entre l'articulation (21) et l'extrémité correspondante du boîtier de la cassette, les éléments de retenue (23) permettant un déplacement limité du bras en direction parallèle à son axe.

5. Dispositif selon l'une quelconque des revendications 2 à 4, caractérisé en ce que l'aiguille est formé de deux parties enclenchées élastiquement l'une sur l'autre, la bande souple étant serrée entre les deux parties lorsqu'elles sont enclenchées l'une sur l'autre.

## Patentansprüche

1. Prüfvorrichtung für Kassetten-Bandgeräte, mit einem zur Anbringung auf einem zu prüfenden Gerät eingerichteten Kassettengehäuse, einer ersten und zweiten Spule, die drehbar im Inneren des Kassettengehäuses angebracht und dazu eingerichtet sind, jeweils mit einer Vorlaufund Rücklaufspindel des Geräts in Eingriff zu kommen und gedreht zu werden, und einer Einrichtung zur Anzeige des Drehmoments, das von jeder der Spindeln auf die entsprechende Spule ausgeübt wird, wobei ein Anzeigeelement durch eine Vorspanneinrichtung gegen ein Ruhestellung vorgespannt ist und durch ein flexibles Band mit jeder der Spulen verbunden ist, und wobei die Verlagerung des Anzeigeelements beobachtet werden kann und proportional zum Drehmoment ist, welches auf eine der Spulen ausgeübt wird, dadurch gekennzeichnet, daß das Band (18) unmittelbar mit dem Anzeigeelement (22) derart verbunden ist, daß die Drehung der Spulen (14, 15) in jeder Richtung das Anzeigeelement veranlaßt, sich aus einer Mittellage zur gerade angetriebenen Spule hin zu bewegen, und zwar um ein Maß, das proportional ist zum Drehmoment, das auf die angetriebene Spule ausgeübt wird.

2. Vorrichtung nach Anspruch 1, dadurch gekennzeichnet, daß das Anzeigeelement einen länglichen Zeiger (24) umfaßt, der ein freies Ende aufweist, das durch ein durchsichtiges Fenster (19) im Kassettengehäuse (10) im Bereich zwischen den Spulen (14, 15) sichtbar ist, und ein gegenüberliegendes Ende aufweist, das schwenkbar (21) im Kassettengehäuse angebracht ist.

3. Vorrichtung nach Anspruch 2, gekennzeichnet durch ein T-förmiges Bauteil (22) aus Kunststoffmaterial, das den länglichen Zeiger und die Spanneinrichtung bildet, wobei die Arme des T-förmigen Teils (25) sich seitlich zu den gegenüberliegenden Seiten der schwenkbaren Befestigung (21) erstrecken und die Spitzen der Arme durch Halteeinrichtungen (23) gegen die Bewegung rechtwinklig zur Achse eines jeden Armes (25) gehalten sind.

4. Vorrichtung nach Anspruch 3, dadurch gekennzeichnet, daß sich jeder Arm (25) über mehr als die halbe Strecke von der schwenkbaren Befestigung (21) zum jeweiligen Ende des Kassettengehäuses hin erstreckt, und daß die Halteeinrichtungen (23) die begrenzte Bewegung des Armes in einer Richtung längs seiner Achse gestatten.

5. Vorrichtung nach einem der Ansprüche 2 bis 4, dadurch gekennzeichnet, daß der längliche Zeiger aus zwei Teilen gebildet ist, die ineinander verrastet sind, und daß das flexible Band sandwichartig zwischen den beiden, miteinander verrasteten Teilen eingeschlossen ist.

Fig.1.

Fig.2.

Fig.3.